# EUROPÄISCHE PATENTANMELDUNG

(11) **EP 1 570 934 A2**
(43) Veröffentlichungstag der Anmeldung: **07.09.2005**
(21) Anmeldenummer: 05003005.5
(22) Anmeldetag: 12.02.2005
(51) Int. Cl.: B23C 3/12, B23Q 39/00

(54) **Eckenputzvorrichtung für Fenster-oder Türrahmen**

(30) Priorität: 05.03.2004 DE 102004011340
(71) Anmelder: ROTOX GmbH B. EISENBACH, D-56858 Grenderich (DE)
(72) Erfinder: Schön, Christoph, 65606 Vilmar-Aumenau (DE)
(74) Vertreter: Müller, Eckhard

(57) **Zusammenfassung**

Es wird eine Eckenputzvorrichtung für aus Profilstäben geschweißten Fenster- oder Türrahmen (1) beschrieben mit wenigstens zwei quer zu einer Förderbahn für die Rahmen (1) relativ zueinander verstellbaren Bearbeitungseinheiten (3, 4), an welchen Bearbeitungswerkzeuge (5 - 9) zur Bearbeitung der Eckverbindungen des Rahmens (1) angeordnet sind. Um eine Bearbeitung von Fenster- und Türrahmen (1) mit Kleinstmaßen zu ermöglichen, und zwar bei gleichzeitigem Einsatz beider Bearbeitungseinheiten (3, 4), ist es vorgesehen, dass von wenigstens zwei sich entsprechenden Bearbeitungswerkzeugen (5, 9) der wenigstens zwei Bearbeitungseinheiten (3, 4) das eine gegenüber den weiteren Bearbeitungswerkzeugen (5 - 8) seiner Bearbeitungseinheit (3 bzw. 4) dem zu bearbeitenden Rahmen (1) nächstgelegen auf einem Werkzeugträger (10, 11)angeordnet ist, während sich das entsprechende Bearbeitungswerkzeug (9) der anderen Bearbeitungseinheit (4 bzw. 3)gegenüber den weiteren Bearbeitungswerkzeugen (5 - 8) seiner Bearbeitungseinheit (4 bzw. 3) am weitesten entfernt von dem zu bearbeitenden Rahmen (1) an einem Werkzeugträger (11 bzw. 10) befindet (Figur 1).

## Beschreibung

Die Erfindung bezieht sich auf eine Eckenputzvorrichtung für aus Profilstäben geschweißten Fenster- oder Türrahmen mit wenigstens zwei quer zu einer Förderbahn für die Rahmen relativ zueinander verstellbaren Bearbeitungseinheiten, an welchen Bearbeitungswerkzeuge zur Bearbeitung der Eckverbindungen des Rahmens angeordnet sind. Weiterhin betrifft die Erfindung ein Verfahren zum Bearbeiten von Fenster- oder Türrahmen mit einer solchen Eckenputzvorrichtung.

Eine derartige Eckenverputzmaschine ist beispielsweise aus der EP 0 325 264 A1 bekannt. Hierbei sind die Bearbeitungswerkzeuge der einander gegenüberliegenden Bearbeitungseinheiten symmetrisch zu der zwischen den beiden Bearbeitungseinheiten verlaufenden Mittelachse angeordnet.

Nachteilig hierbei ist, dass bei Kleinstmaßen der Fenster- oder Türrahmen eine synchrone Bearbeitung mit den beiden gegenliegenden Bearbeitungseinheiten nicht mehr möglich ist, da es hierbei zu einer Kollision der auf den Werkzeugträgern angeordneten Werkzeuge beziehungsweise der Werkzeugbänke selbst kommt. Bei solchen Rahmen muß daher mit einer Bearbeitungseinheit gefahren werden, was insbesondere bei aufwendigen Profilaußenkonturen sehr zeitaufwendig ist.

Davon ausgehend liegt der Erfindung die Aufgabe zugrunde, eine Eckenverputzvorrichtung der eingangs genannten Art dahingehend weiterzubilden, dass mit einfachen konstruktiven Mitteln eine Bearbeitung von Fenster- und Türrahmen auch mit Kleinstmaßen ermöglicht ist, und zwar bei gleichzeitigem Einsatz beider Bearbeitungseinheiten.

Zur Lösung dieser Aufgabe ist es bei einer Eckenputzvorrichtung mit den eingangs genannten Merkmalen vorgesehen, dass von wenigstens zwei sich entsprechenden Bearbeitungswerkzeugen der wenigstens zwei Bearbeitungseinheiten das eine gegenüber den weiteren Bearbeitungswerkzeugen seiner Bearbeitungseinheit dem zu bearbeitenden Rahmen nächstgelegen auf einem Werkzeugträger angeordnet ist, während sich das entsprechende Bearbeitungswerkzeug der anderen Bearbeitungseinheit gegenüber den weiteren Bearbeitungswerkzeugen seiner Bearbeitungseinheit am weitesten entfernt von dem zu bearbeitenden Rahmen an einem Werkzeugträger befindet.

Durch die gleichgerichtete Anordnung von wenigstens zwei sich entsprechenden Bearbeitungswerkzeugen der wenigstens zwei gegenüberstehenden Bearbeitungseinheiten ist eine Bearbeitung auch von Kleinstmaßen bei Fenster- und Profilrahmen erreicht, wobei sich jeweils wenigstens ein Bearbeitungswerkzeug jeder Bearbeitungseinheit in Eingriff mit dem zu bearbeitenden Werkstück befindet.

Nach einer ersten besonderen Ausführungsform der Erfindung ist es vorgesehen, dass die wenigstens zwei sich entsprechenden Bearbeitungswerkzeuge für die Bearbeitung des jeweiligen Außenecks des Rahmens, bspw. als Konturfräse, ausgebildet sind. Durch die Anordnung der Scheibenkonturfräser in dem zu dem zu bearbeitenden Werkstück weisenden vorderen Bereich des Werkzeugträgers der einen Bearbeitungseinheit und der Anordnung des Scheibenkonturfräsers der gegenüberliegenden Bearbeitungseinheit im hinteren Bereich des Werkzeugträgers vom Werkstück weg gerichtet, lassen sich Kleinstmaße von Fenster- und Profilrahmen auch im sogenannten Zweikopf-Betrieb bearbeiten, was die Taktzeit bei der Bearbeitung eines Fensterrahmens erheblich verkürzt.

Bevorzugt ist es nach der Erfindung vorgesehen, dass sich entsprechende Bearbeitungswerkzeuge der wenigstens zwei Bearbeitungseinheiten in Querrichtung der Förderbahn in gleicher Aufeinanderfolge an den zugeordneten Werkzeugträgern befinden. Hierdurch ist es möglich, dass jeweils sich entsprechende Bearbeitungswerkzeuge der beiden Bearbeitungseinheiten an den gegenüberliegenden Ecken des Fenster- oder Türrahmens zum Einsatz gelangen. Insgesamt lässt sich dadurch der Programmieraufwand für das Verfahren der Bearbeitungseinheiten erheblich reduzieren.

Im Rahmen der Erfindung liegt es auch, dass die wenigstens zwei Bearbeitungseinheiten jeweils zwei im Abstand voneinander angeordnete Werkzeugträger mit Bearbeitungswerkzeugen aufweisen, wobei die einander entsprechenden Bearbeitungswerkzeuge an den beiden Werkzeugträgern jeder Bearbeitungseinheit spiegelsymmetrisch zur Ebene der Förderbahn angeordnet sind. Aufgrund der verkürzten Verfahrwege für die Bearbeitung der beiden Sichtflächen des Rahmens lässt sich die Taktzeit nochmals verkürzen.

Insoweit ist es nach der Erfindung vorgesehen, dass jede der beiden quer zur Förderbahn einander gegenüberstehenden Bearbeitungseinheiten jeweils nur ein Bearbeitungswerkzeug zur Bearbeitung der jeweiligen Rahmenecke, insbesondere einen Scheibenfräser aufweist. Hierdurch der konstruktive Aufwand der Eckenputzmaschine erheblich reduziert.

Im Rahmen der Erfindung liegt es auch, dass bis auf das Bearbeitungswerkzeug für die Bearbeitung des Außenecks des Rahmens die weiteren Bearbeitungswerkzeuge paarweise nebeneinander in Längsrichtung des Werkzeugträgers angeordnet sind. Hierdurch lassen sich auf kleinstem Raum eine Vielzahl von unterschiedlichen Bearbeitungswerkzeugen an dem Werkzeugträger anordnen, ohne dass der Werkzeugträger länger baut. Trotz einer Vielzahl von Bearbeitungswerkzeugen ist dabei nach wie vor die Bearbeitung von Fenster- oder Türrahmen mit Kleinstmaßen ermöglicht.

Wie an sich bekannt, können die beiden Bearbeitungseinheiten zumindest quer zur Förderbahn relativ zueinander verfahrbar sein. Dabei kann eine Bearbeitungseinheit bspw. feststehend angeordnet sein, während die zweite Bearbeitungseinheit quer zur Förderrichtung verfahrbar ist.

Selbstverständlich ist es nach der Erfindung auch möglich, dass die wenigstens zwei Bearbeitungseinheiten jeweils um eine Achse in und außer der Bearbeitungsstellung mit dem jeweiligen Rahmeneck verschwenkbar ausgebildet sind. In einer Fertigungsstraße können dann durch Verschwenken und entsprechendes Zustellen der Bearbeitungseinheiten die gegenüberliegenden Rahmenecken des vorauslaufenden Rahmens und des nachlaufenden Rahmens bearbeitet werden.

Selbstverständlich ist auch eine sogenannte Vierkopf-Anordnung möglich, wie diese bspw. in der EP 0 325 264 A2 beschrieben ist.

Auch können zum Zustellen der Bearbeitungseinheiten diese in zwei, vorzugsweise in drei senkrecht aufeinderstehenden Richtungen verfahrbar sein.

Nach einem wiederum anderen Gedanken der Erfindung ist es vorgesehen, dass die Bearbeitungswerkzeuge an den jeweiligen Werkzeugträgern in und außer der Bearbeitungsstellung für das jeweilige Rahmeneck verstellbar, bspw. verschwenkbar und/oder verfahrbar, sind. Dies kann bspw. durch eine Linearbewegung senkrecht zur Rahmenebene und/oder durch Verschwenken des jeweiligen Bearbeitungswerkzeuges gegen das Fenster- oder Türprofil erfolgen.

Im Rahmen der Erfindung liegt auch ein Verfahren zur Bearbeitung von aus Profilstäben geschweißten Fenster- oder Türrahmen mit wenigstens zwei zu einer Förderbahn für die Rahmen relativ zueinander verstellbaren Bearbeitungseinheiten, wie diese oben beschrieben sind. Dabei ist es vorgesehen, dass quer zur Förderbahn gegenüberliegende Rahmenecken des Rahmens mit sich entsprechenden Bearbeitungswerkzeugen der gegenüberliegenden Bearbeitungseinheiten gleichzeitig bearbeitet werden. Hierdurch ist die Taktzeit für die Bearbeitung der gegenüberliegenden Rahmenecken und damit für die Bearbeitung des gesamten Fenster- und Türrahmens erheblich reduziert.

Im Falle von quer zur Förderbahn relativ zueinander verfahrbaren Bearbeitungseinheiten ist es vorgesehen, dass diese gemeinsam in gleicher Richtung an das jeweilige Rahmeneck zugestellt werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figuren 1 bis 5: eine mögliche Ausführungsform einer erfindungsgemäßen Eckenputzvorrichtung mit zwei quer zur Förderrichtung des zu bearbeitenden Rahmens verfahrbaren Bearbeitungseinheiten, in unterschiedlichen Bearbeitungsstellungen,
- Figuren 6 bis 10: eine weitere Ausführungsform einer erfindungsgemäßen Eckenputzvorrichtung mit zwei verschwenkbaren Bearbeitungseinheiten, wiederum in unterschiedlichen Bearbeitungsstellungen an Fenster- oder Türrahmen,
- Figuren 11 bis 15: eine wiederum andere Ausführungsform einer erfindungsgemäßen Eckenputzvorrichtung mit an vier Rahmenecken des zu bearbeitenden Rahmens angreifenden Bearbeitungseinheiten, in unterschiedlichen Bearbeitungsstellungen,
- Figuren 16 und 17: zwei mögliche Ausführungsformen einer erfindungsgemäßen Eckenputzvorrichtung mit jeweils zwei Werkzeugträger aufweisenden Bearbeitungseinheiten.

Die in der Zeichnung dargestellten Eckenputzvorrichtungen dienen dazu, die an den Ecken von aus Kunststoff- oder Metallprofilstäben stumpf geschweißten Fenster- oder Türrahmen 1 entstandenen Schweißraupen zu entfernen. Dabei werden die zu bearbeitenden Rahmen 1 auf einer nicht dargestellten Förderbahn in Richtung des Pfeiles 2 herangefördert.

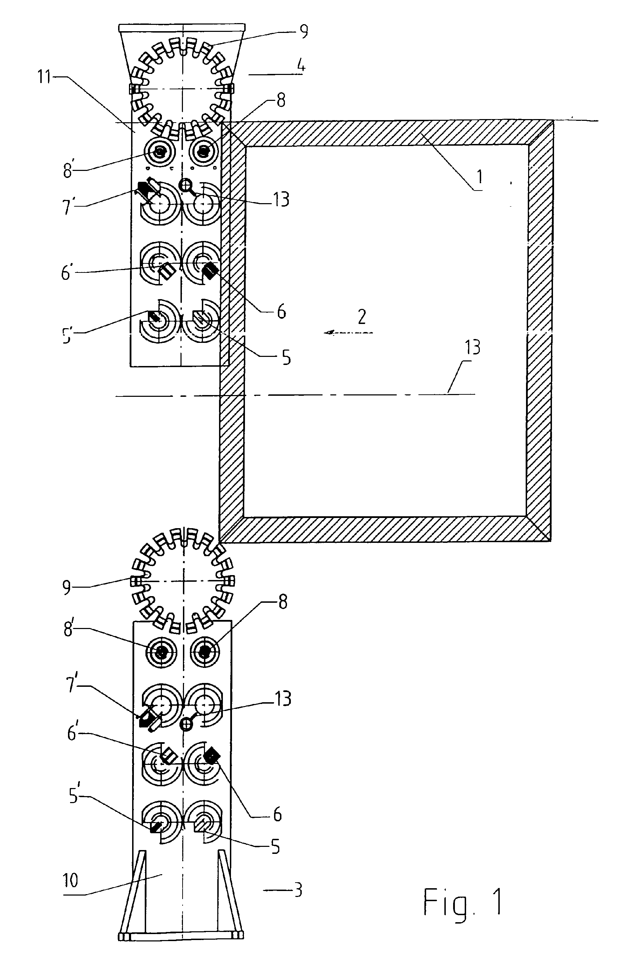

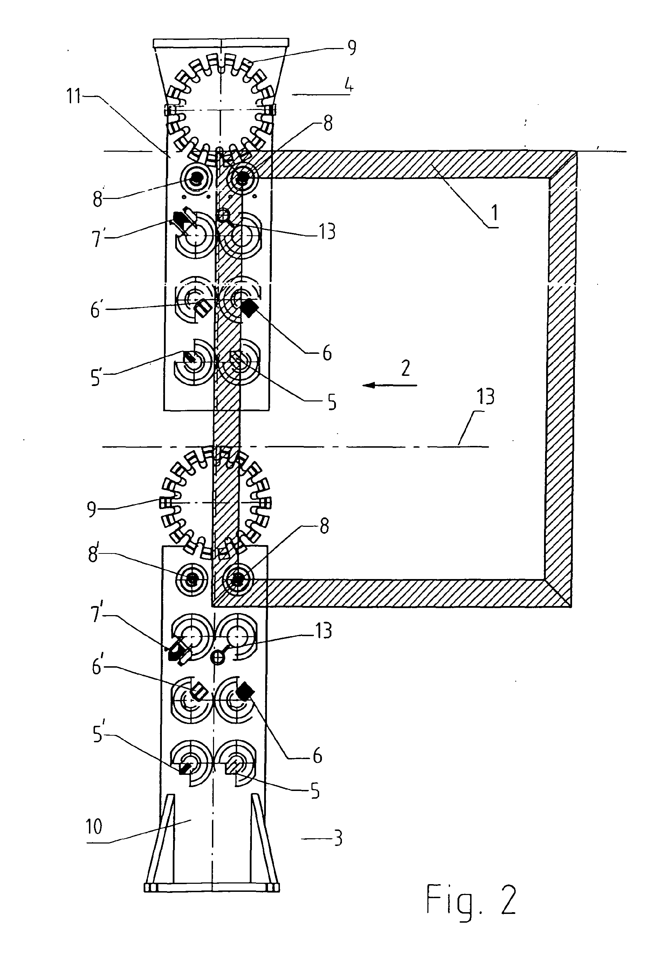

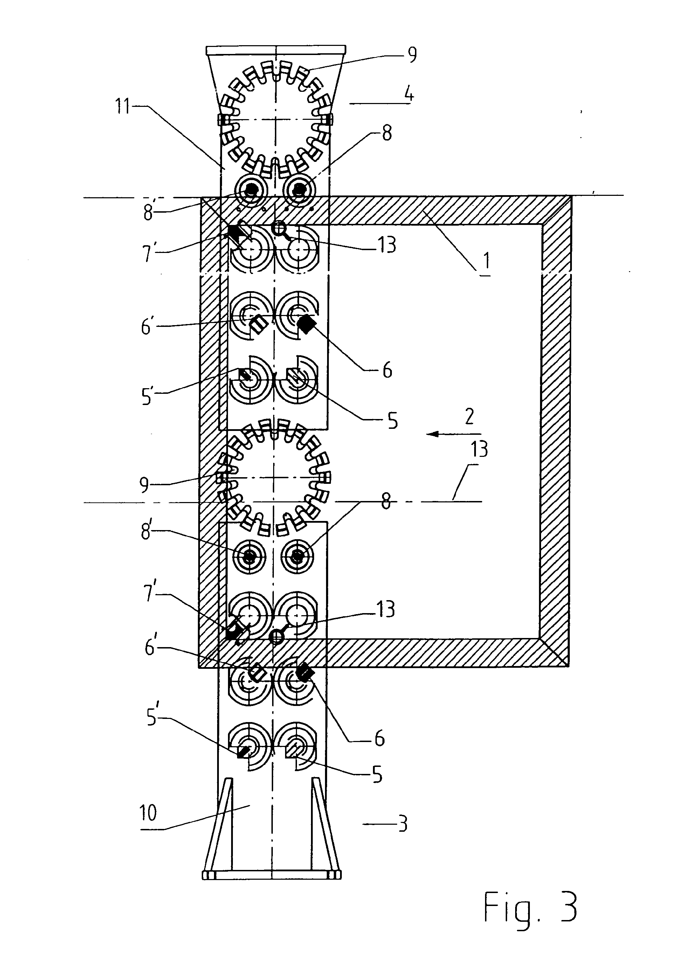

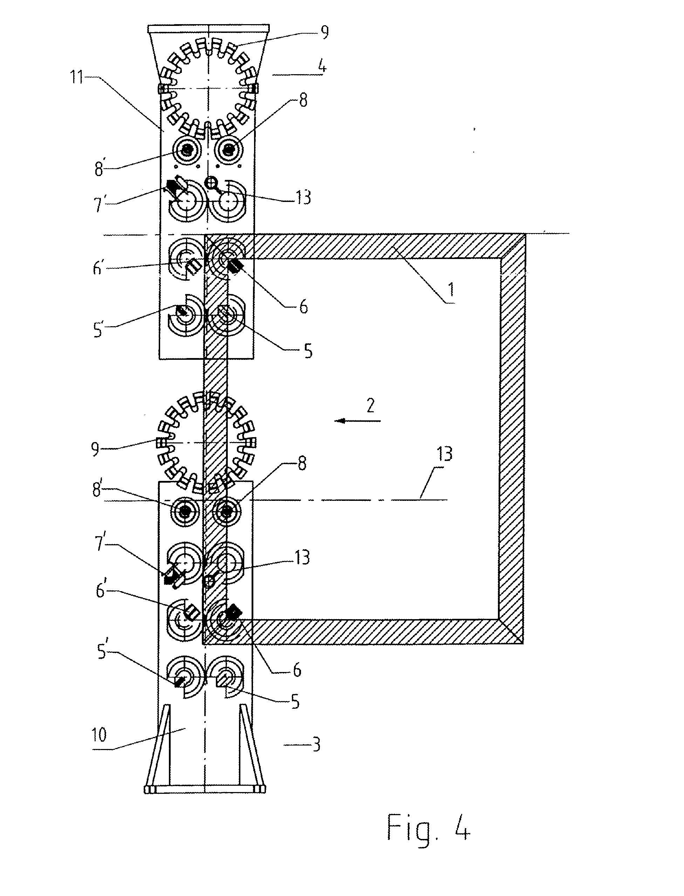

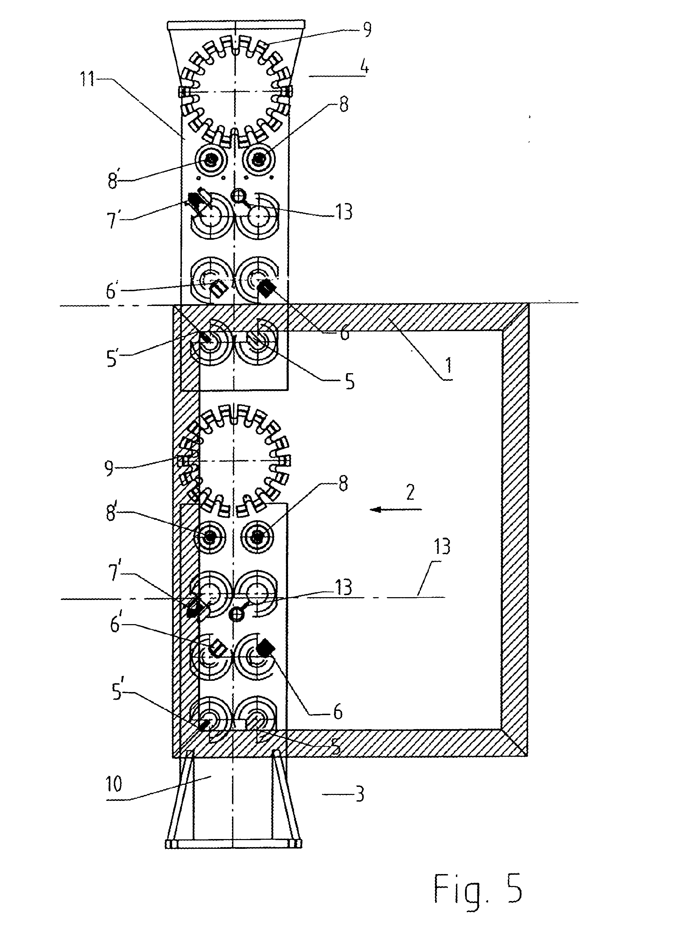

Bei dem Ausführungsbeispiel gemäß Figuren 1 bis 5 ist im Verlauf der Förderbahn eine erste Gruppe von zwei Bearbeitungseinheiten 3, 4 vorgesehen. Die Bearbeitungseinheiten 3, 4 weisen Werkzeugträger 10, 11 in Form von Werkzeugbänken auf, welche mittels nicht dargestellter Führungen in Förderrichtung, quer zur Förderrichtung und senkrecht dazu verfahrbar sind. Die Bearbeitungseinheiten 3, 4 bzw. ihre Werkzeugträger 10, 11 weisen bspw. Bearbeitungswerkzeuge für die Innen- und Außenecke des jeweiligen Rahmenecks wie auch für die Sichtflächen des Rahmens 1 auf. Im einzelnen sind Inneneckbearbeitungswerkzeuge 5, Sichtflächenbearbeitungswerkzeuge 6, weitere Sichtflächenbearbeitungswerkzeuge 7, für eine andere Profilart, Bohr- bzw. Fräseinheiten 8, zum Ausbohren der Dichtungsnut und Außeneckkonturfräser 9 für die Bearbeitung des jeweiligen Rahmenecks vorgesehen.

Bei dem Ausführungsbeispiel gemäß Figuren 1 bis 4 sind bis auf den Konturfräser 9 die Bearbeitungswerkzeuge jeweils paarweise auf jedem Werkzeugträger 10, 11 angeordnet, wobei jedes einzelne Paar 5, 5', 6, 6', 7, 7', 8, 8' mit unterschiedlichen Werkzeugen für unterschiedliche Profilsysteme bestückt sein kann.

Wie aus den Figuren 1 bis 4 ersichtlich, sind die Bearbeitungswerkzeuge 5, 5' bis 8, 8' und 9 - quer zur Förderrichtung 2 des Rahmens 1 gesehen - in gleicher Aufeinanderfolge an den zugeordneten Werkzeugträgern 10, 11 angeordnet. Dabei sind dem hier gewählten Ausführungsbeispiel die Inneneckbearbeitungswerkzeuge 5, 5' an dem nach außen, von dem Werkstück 1 weg weisenden Ende des Werkzeugträgers 10 der Bearbeitungseinheit 3 angeordnet, während sich das entsprechende Inneneckbearbeitungswerkzeug 5, 5' der gegenüberliegenden Bearbeitungseinheit 4 an dem in das Maschineninnere weisende freien Ende der Werkzeugbank 11 befindet.

Wie bereits erwähnt, dienen die weiteren Bearbeitungswerkzeuge 5' bis 8' der Bearbeitung weiterer Profilarten und Typen bzw. Werkstücksysteme. Durch die paarweise Anordnung der Bearbeitungswerkzeuge nebeneinander lassen sich die Werkzeugträger 3, 4 kürzer bauen, als wenn bspw. die einzelnen Bearbeitungswerkzeuge in einer Reihe hintereinander angeordnet wären. Dies dient ebenfalls dem Zweck, Kleinstmaße von Fenster- oder Türrahmen 1 zu bearbeiten.

Wie aus den einzelnen Arbeitsabfolgen der Figuren 1 bis 4 ersichtlich, kommen jeweils gleiche Bearbeitungswerkzeuge 5 bis 9 der beiden Bearbeitungseinheiten 3, 4 synchron zur Bearbeitung an dem jeweiligen Rahmeneck. Das Abarbeiten des Rahmenecks erfolgt bei dem hier dargestellten Ausführungsbeispiel dadurch, dass die beiden Bearbeitungseinheiten 3, 4 bzw. ihre Werkzeugträger 10, 11 gleichgerichtet und synchron verfahren werden. Das Zustellen der Bearbeitungswerkzeuge 5 bis 9 ist also gleichgerichtet, während natürlich die eigentliche Bearbeitungsbewegung der einzelnen Bearbeitungswerkzeuge 5 bis 9 selbst nicht gleichgerichtet sein muß.

Wie aus den Figuren ersichtlich, ist der Scheibenkonturfräser 9 bei der einen Bearbeitungseinheit 3 an dem nach innen weisenden Ende des Werkzeugträgers 10 angeordnet, während er sich bei der gegenüberliegenden Bearbeitungseinheit 4 an dem nach außen weisenden Ende des Werkzeugträgers 11 befindet. Hierdurch ist eine platzsparende Bauweise erreicht. Gegenüber einer Anordnung bei der der Scheibenkonturfräser 9 sich etwa in der Mitte der beiden Bearbeitungsträger 10, 11 befinden würde, ermöglicht die hier gezeigte Ausführungsform die Bearbeitung wesentlich kleinerer Fenster- oder Türrahmen 1.

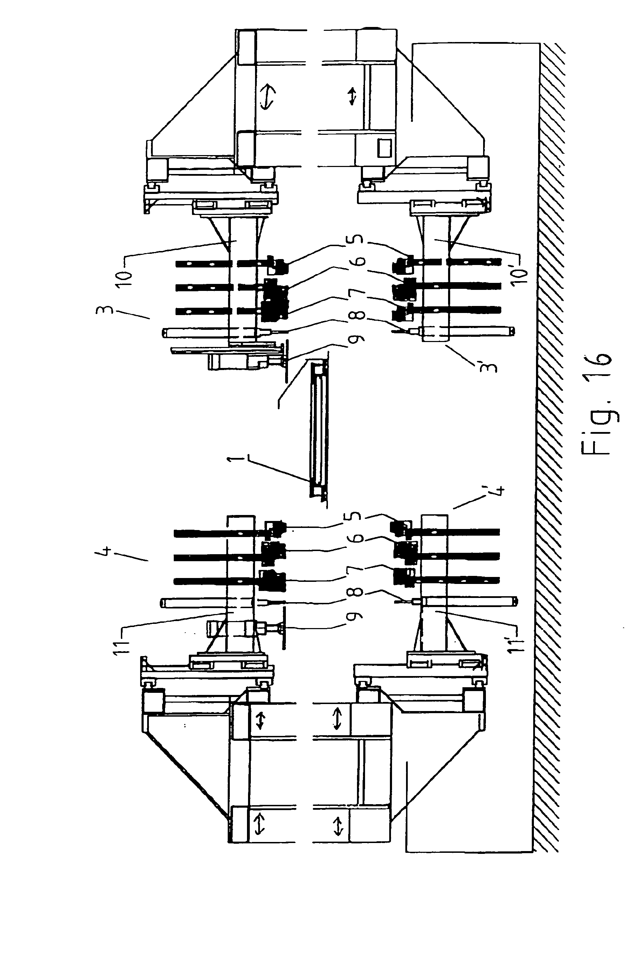

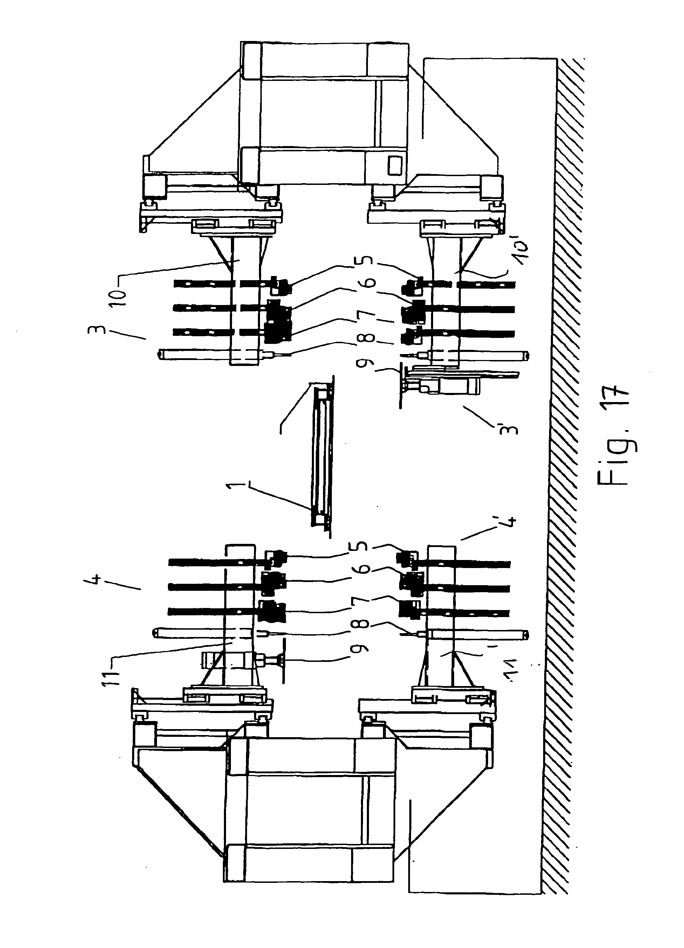

Wie aus Figuren 16, 17 ersichtlich, können die Bearbeitungseinheiten 3, 4 jeweils zwei im Abstand voneinander angeordnete Werkzeugträger 10, 10' und 11, 11' mit Bearbeitungswerkzeugen aufweisen. Mit den Bearbeitungswerkzeugen 5 bis 8 lassen sich die gegenüberliegenden Sichtflächen des Rahmens 1 durch kurze Zustellwege der Werkzeuge mit sehr geringer Taktzeit bearbeiten. Zur Bearbeitung des jeweiligen Außenecks des Rahmens 1 ist natürlich nur ein Scheibenkonturfräser 9 für jede Bearbeitungseinheit 3, 4 erforderlich. Bei dem Ausführungsbeispiel gemäß Figur 16 sind die Scheibenkonturfräser 9 jeder Bearbeitungseinheit 3, 4 an den oberen Werkzeugträgern 10, 11 angeordnet. Selbstverständlich ist es auch möglich, dass die Scheibenkonturfräser 9 auf die diagonal gegenüberliegenden Werkzeugträgern 11, 10' gemäß Figur 17 angeordnet sind. Wie durch die Doppelpfeile in Figuren 16 und 17 angedeutet, sind die beiden Werkzeugträger 10, 10' bzw. 11, 11' der beiden Bearbeitungseinheiten 3, 4 unabhängig voneinander verfahrbar.

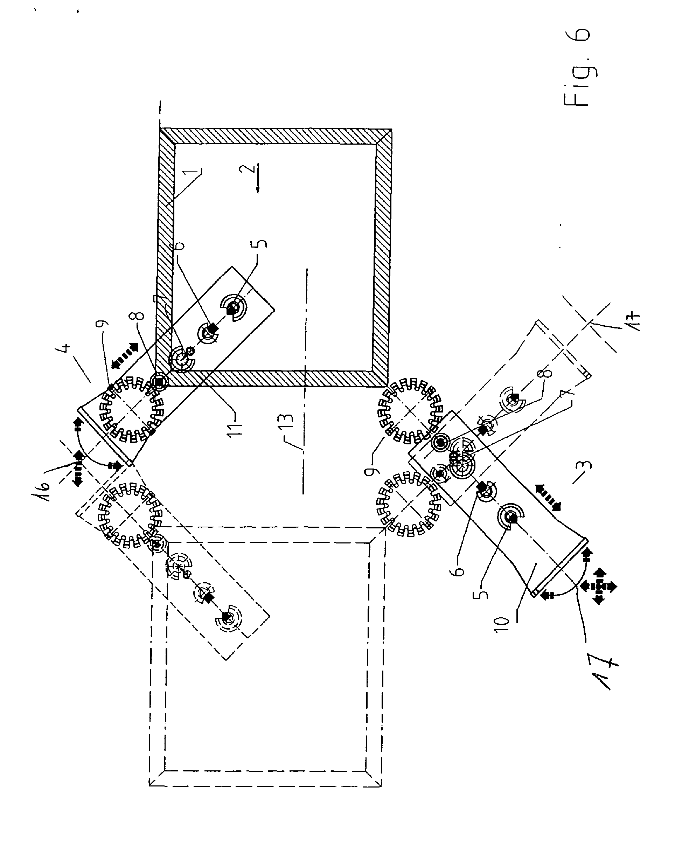

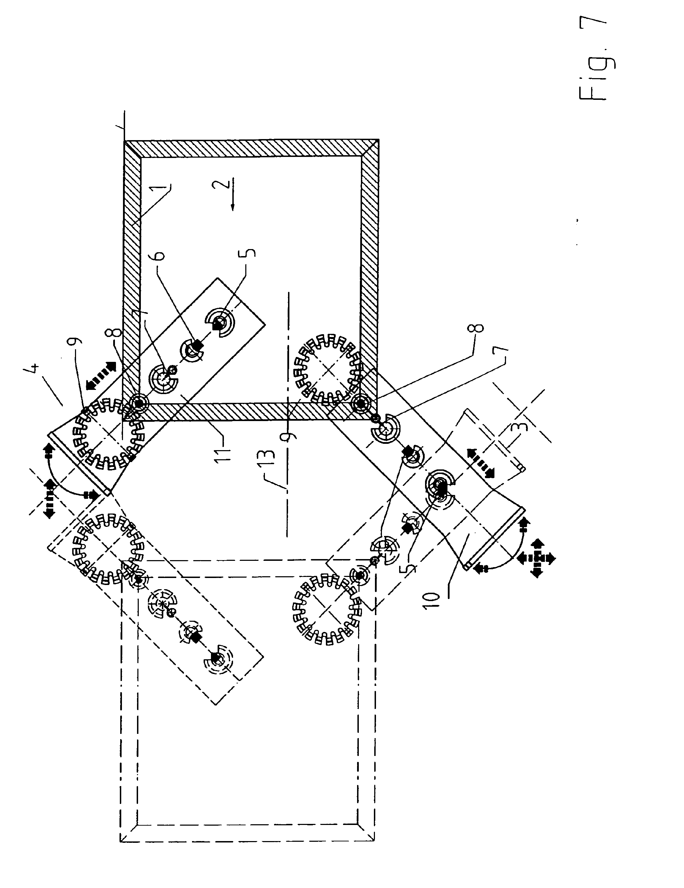

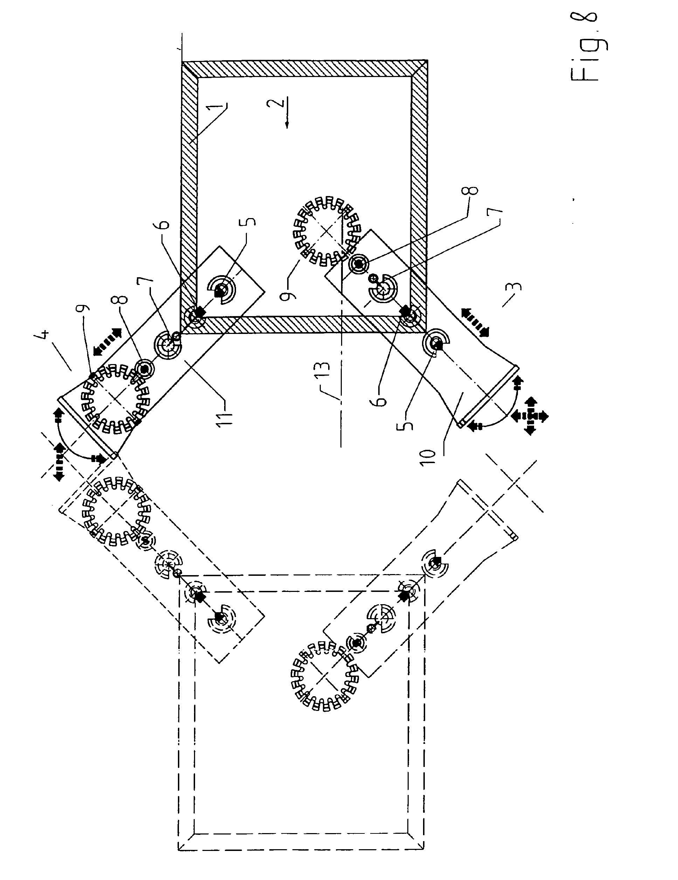

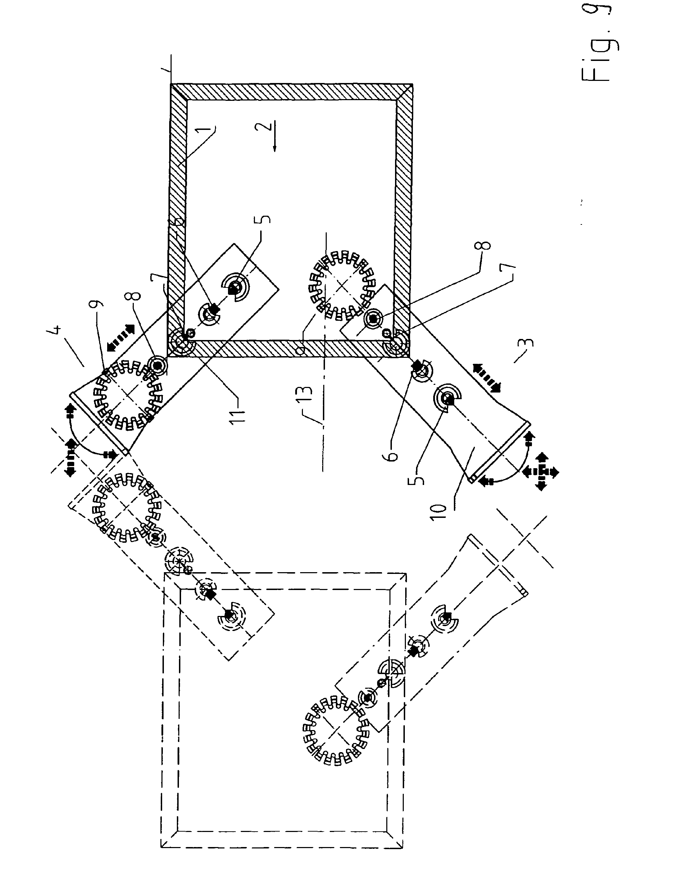

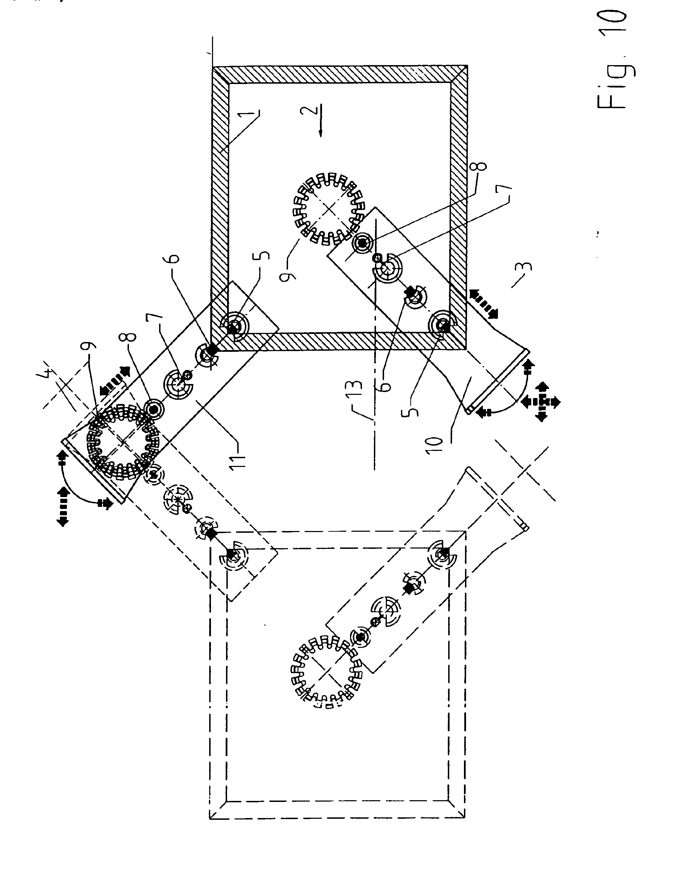

Figuren 6 bis 10 zeigen eine Eckenputzvorrichtung, bei welcher die Bearbeitungseinheiten 3, 4 um zur Förderebene senkrechte Achsen 16, 17 verschwenkbar ausgebildet sind. Die Schwenkbewegung erfolgt dabei so, dass die Längsachse der Werkzeugträger 10, 11 auf die Gehrung der beiden aufeinander zulaufenden Profilstücke des jeweiligen Rahmenecks ausgerichtet ist. Um die einzelnen Bearbeitungswerkzeuge 5 bis 9 in Arbeitsstellung zu bringen, erfolgt ein schrittweises Zustellen der Bearbeitungseinheiten 3, 4 in Gehrungsrichtung.

Wie aus der gestrichelten Darstellung der Bearbeitungseinheiten 3, 4 bzw. eines weiteren Rahmens ersichtlich, kann bei dieser Ausführungsform einer Eckenputzvorrichtung durch eine Schwenkbewegung und durch ein dreiachsiges Verfahren der Bearbeitungseinheiten 3, 4 das jeweils vor oder nachfolgende Rahmeneck bearbeitet werden.

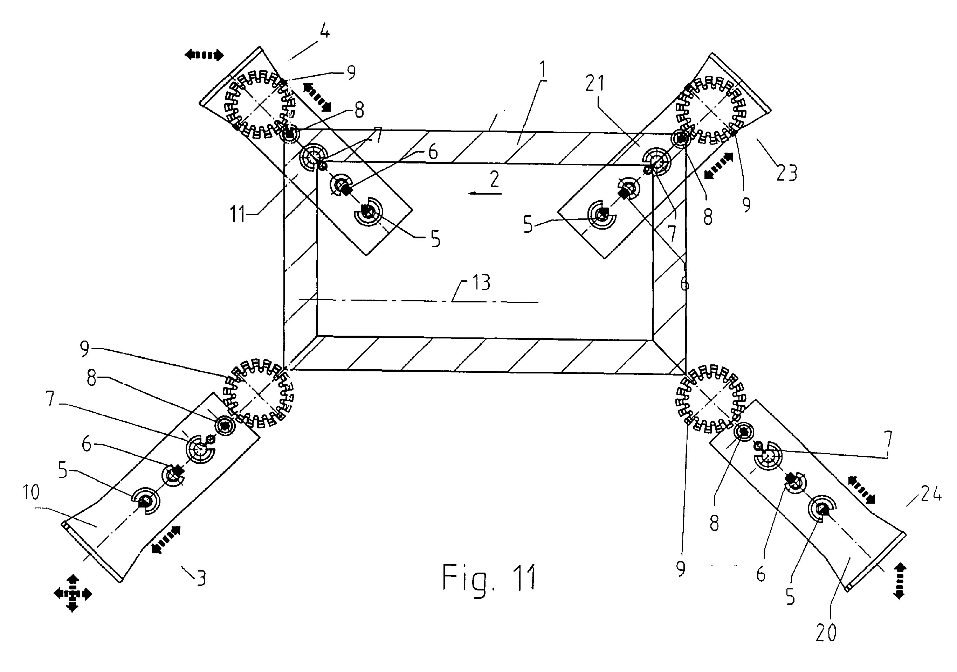

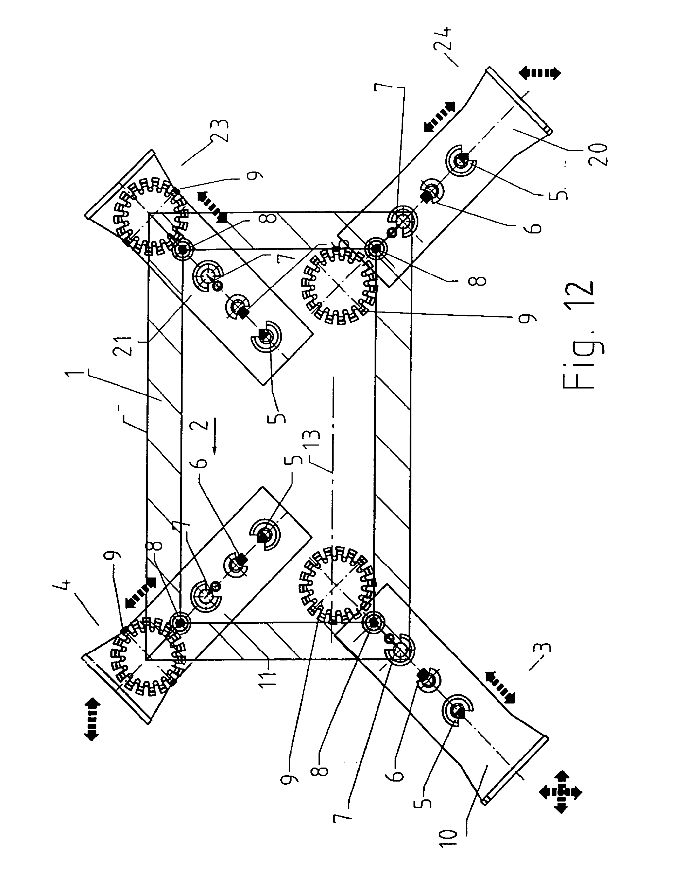

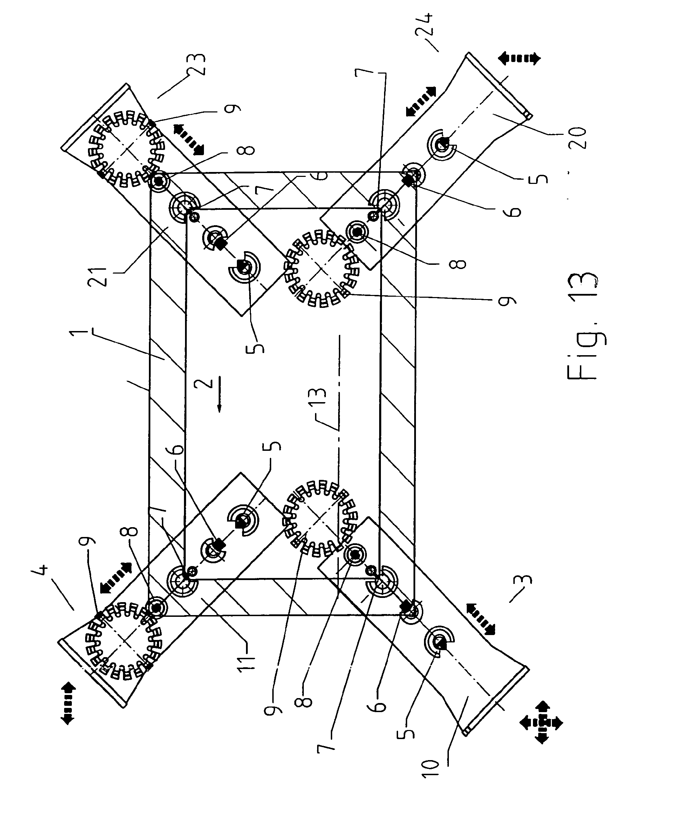

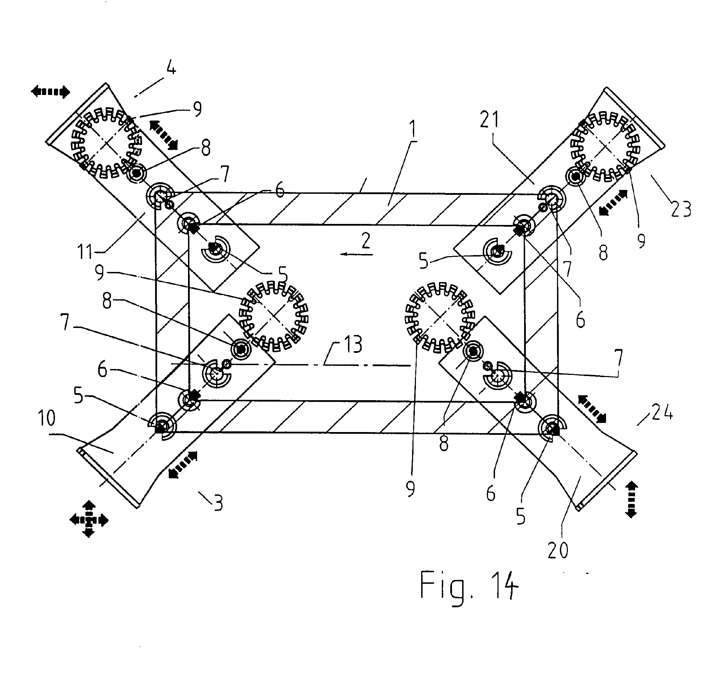

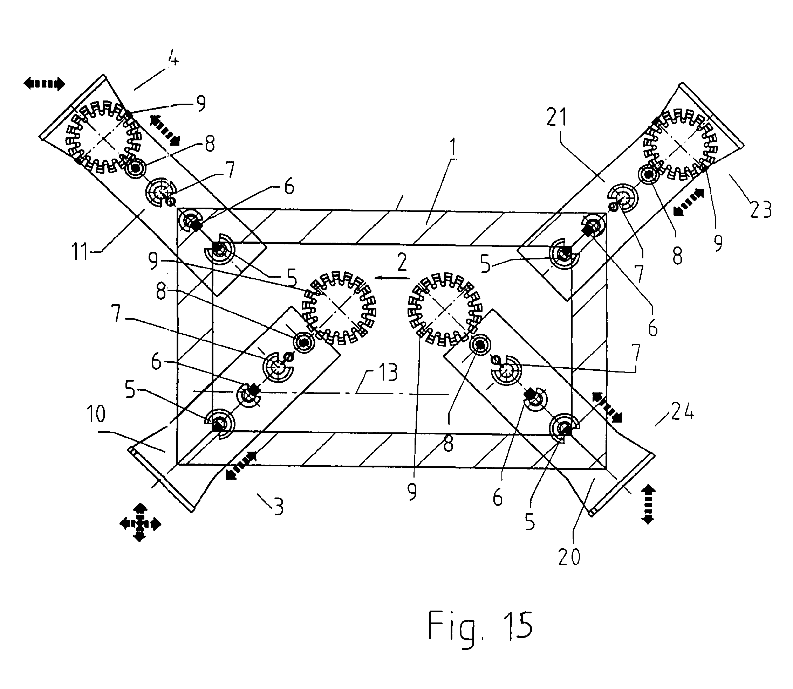

Schließlich ist in Figuren 11 bis 15 eine sogenannte Vierkopfmaschine dargestellt mit insgesamt vier Bearbeitungseinheiten 3, 4, 23, 24, welche gleichzeitig die vier Ecken des Rahmens 1 bearbeiten. Die Arbeitsabfolge ist ähnlich derjenigen gemäß Figuren 6 bis 10, wobei jedoch auf die Verschwenkbarkeit der Bearbeitungseinheiten bei dem hier gewählten Ausführungsbeispiel der Einfachheit halber verzichtet wurde.

### Bezugszeichenliste

- 1 -: Fenster- oder Türrahmen
- 2 -: Förderrichtung
- 3 -: Bearbeitungseinheit
- 4 -: Bearbeitungseinheit
- 5 -: Inneneckbearbeitungseinheit
- 6 -: Sichtflächenbearbeitungseinheit
- 7 -: Sichtflächenbearbeitungseinheit
- 8 -: Bohr- und Fräseinheit
- 9 -: Außeneckkonturfräseinheit
- 10 -: Werkzeugträger
- 10' -: Werkzeugträger
- 11 -: Werkzeugträger
- 11' -: Werkzeugträger
- 16 -: Schwenkachse
- 17 -: Schwenkachse
- 20 -: Werkzeugträger
- 21 -: Werkzeugträger
- 23 -: Bearbeitungseinheit
- 24 -: Bearbeitungseinheit

## Patentansprüche

1. Eckenputzvorrichtung für aus Profilstäben geschweißten Fenster- oder Türrahmen (1) mit wenigstens zwei quer zu einer Förderbahn für die Rahmen (1) relativ zueinander verstellbaren Bearbeitungseinheiten (3, 4; 23, 24), an welchen Bearbeitungswerkzeuge (5 - 9) zur Bearbeitung der Eckverbindungen des Rahmens (1) angeordnet sind, **dadurch gekennzeichnet, dass** von wenigstens zwei sich entsprechenden Bearbeitungswerkzeugen (5 - 9) der wenigstens zwei Bearbeitungseinheiten (3, 4; 23, 24) das eine gegenüber den weiteren Bearbeitungswerkzeugen (5 - 8) seiner Bearbeitungseinheit (3 bzw. 4, 23 bzw. 24) dem zu bearbeitenden Rahmen (1) nächstgelegen auf einem Werkzeugträger (10, 11 bzw. 20, 21)angeordnet ist, während sich das entsprechende Bearbeitungswerkzeug (9) der anderen Bearbeitungseinheit (4 bzw. 3, 24 bzw. 23)gegenüber den weiteren Bearbeitungswerkzeugen (5 - 8) seiner Bearbeitungseinheit (4, 3 bzw. 24, 23) am weitesten entfernt von dem zu bearbeitenden Rahmen (1) an einem Werkzeugträger (11, 10 bzw. 21, 20) befindet.

2. Eckenputzvorrichtung nach Anspruch 1, **dadurch gekennzeichnet, dass** die wenigstens zwei sich entsprechenden Bearbeitungswerkzeuge (9) für die Bearbeitung des jeweiligen Außenecks des Rahmens (1), beispielsweise als Konturfräser, ausgebildet sind.

3. Eckenputzvorrichtung nach Anspruch 1 oder 2, **dadurch gekennzeichnet, dass** sich entsprechende Bearbeitungswerkzeuge (5 - 9) der wenigstens zwei Bearbeitungseinheiten (3, 4; 23, 24) in Querrichtung der Förderbahn in gleicher Aufeinanderfolge an den zugeordneten Werkzeugträgern (10, 11) angeordnet sind.

4. Eckenputzvorrichtung nach einem der vorhergehenden Ansprüche, **dadurch gekennzeichnet, dass** die wenigstens zwei Bearbeitungseinheiten (3, 4; 23, 24) jeweils zwei im Abstand voneinander angeordnete Werkzeugträger (10, 10', 11, 11') mit Bearbeitungswerkzeugen (5 - 9)zur Bearbeitung der gegenüberliegenden Seiten des jeweiligen Rahmenecks aufweisen, wobei ggf. die einander entsprechenden Bearbeitungswerkzeuge (5 - 9) an den beiden Werkzeugträgern (10, 14 bzw. 11, 15) jeder Bearbeitungseinheit (3, 4, 23, 24) spiegelsymmetrisch zur Ebene der Förderbahn (2) angeordnet sind.

5. Eckenputzvorrichtung nach Anspruch 4, **dadurch gekennzeichnet, dass** jede der beiden quer zur Förderbahn einander gegenüberstehenden Bearbeitungseinheiten (3, 4; 23, 24) jeweils nur ein Bearbeitungswerkzeug (9) zur Bearbeitung des jeweiligen Rahmenaußenecks aufweist.

6. Eckenverputzvorrichtung nach einem der vorhergehenden Ansprüche, **dadurch gekennzeichnet, dass** bis auf das Bearbeitungswerkzeug (9) für die Bearbeitung des Außenecks des Rahmens (1) die weiteren Bearbeitungswerkzeuge (5 bis 8, 5 bis 8') paarweise nebeneinander in Längsrichtung des Werkzeugträgers (10, 11, 10', 11') angeordnet sind.

7. Eckenverputzvorrichtung nach einem der vorhergehenden Ansprüche, **dadurch gekennzeichnet, dass** die beiden Bearbeitungseinheiten (3, 4; 23, 24)zumindest quer zur Förderbahn relativ zueinander verfahrbar sind.

8. Eckenverputzvorrichtung nach einem der vorhergehenden Ansprüche, **dadurch gekennzeichnet, dass** die wenigsten zwei Bearbeitungseinheiten (3, 4; 23, 24) jeweils um eine Achse (16, 17) in und aus der Bearbeitungsstellung für das jeweilige Rahmeneck verschwenkbar sind.

9. Eckenverputzvorrichtung nach einem der vorhergehenden Ansprüche, **dadurch gekennzeichnet, dass** zumindest eine der wenigsten zwei Bearbeitungseinheiten (3, 4; 23, 24) in zwei, vorzugsweise drei senkrecht aufeinanderstehenden Richtungen verfahrbar ist.

10. Eckenverputzvorrichtung nach einem der vorhergehenden Ansprüche, **dadurch gekennzeichnet, dass** die Bearbeitungswerkzeuge (5 - 9) an den jeweiligen Werkzeugträgern (3, 4; 23, 24) in und aus einer Bearbeitungsstellung für das jeweilige Rahmeneck verstellbar, beispielsweise verschwenkbar und/oder verfahrbar, sind.

11. Verfahren zur Bearbeitung von aus Profilstäben geschweißten Fenster- oder Türrahmen (1) mit wenigstens zwei quer zu einer Förderbahn für die Rahmen (1) relativ zueinander verstellbaren Bearbeitungseinheiten (3, 4; 23, 24) gemäß einem der vorhergehenden Ansprüche, **dadurch gekennzeichnet, dass** quer zur Förderbahn gegenüberliegende Rahmenecken des Rahmens (1) mit sich entsprechenden Bearbeitungswerkzeugen (5 - 9) der gegenüberliegenden Bearbeitungseinheiten (3, 4; 23, 24) gleichzeitig bearbeitet werden.

12. Verfahren nach Anspruch 10, **dadurch gekennzeichnet, dass** bei quer zur Förderbahn relativ zueinander verfahrbaren Bearbeitungseinheiten (3, 4) diese gemeinsam in gleicher Richtung an das jeweilige Rahmeneck zugestellt werden.
